# EUROPÄISCHE PATENTSCHRIFT

(11) **EP 2 115 934 B1**
(45) Veröffentlichungstag und Bekanntmachung des Hinweises auf die Patenterteilung: **24.06.2015**
(21) Anmeldenummer: 07857670.9
(22) Anmeldetag: 17.12.2007
(51) Int. Cl.: H04L 9/32

(54) **DATENVERARBEITUNGSSYSTEM ZUR DURCHFÜHRUNG VON ZERTIFIKATSKETTENPRÜFUNGEN**
DATA PROCESSING SYSTEM FOR CARRYING OUT CERTIFICATE STRING CHECKING
SYSTÈME DE TRAITEMENT DE DONNÉES POUR EFFECTUER DES CONTRÔLES DE CHAÎNES DE CERTIFICATS

(30) Priorität: 22.12.2006 DE 102006062177
(43) Veröffentlichungstag der Anmeldung: 11.11.2009
(73) Patentinhaber: Bundesdruckerei GmbH, 10958 Berlin (DE)
(72) Erfinder: ACKERMANN, Ulrich, 14532 Kleinmachnow (DE); RIEGEL, Holger, 13403 Berlin (DE); STOYKE, André, 13595 Berlin (DE); HAGEDORN, Michael, 10115 Berlin (DE); BÜNDIG, Barbara, 16356 Ahrensfelde (DE); THIELEMANN, Katrin, 12683 Berlin (DE); SCHUSTER, Thilo, 73230 Kirchheim unter Teck (DE); SCHWARZE, Jochen-Ulrich, 73728 Esslingen (DE); LOHMANN, Jens, 10319 Berlin (DE)
(74) Vertreter: Richardt Patentanwälte PartG mbB
(86) Internationale Anmeldenummer: PCT/EP2007/064039
(87) Internationale Veröffentlichungsnummer: WO 2008/077834

(56) Entgegenhaltungen:
- EP-A- 1 701 282
- US-A- 6 044 462
- US-A1- 2005 278 534
- US-B1- 6 442 688

## Beschreibung

Die Erfindung betrifft ein Datenverarbeitungssystem zur Durchführung von Zertifikatskettenprüfungen sowie ein entsprechendes Datenverarbeitungsverfahren und ein Computerprogrammprodukt.

Aus dem Stand der Technik sind so genannte Public Key Infrastructures (PKI) bekannt, insbesondere hierarchische, mesh, und andere PKIs. Für eine vollständige Überprüfung der Gültigkeit einer digitalen Signatur ist die Validierung des der digitalen Signatur zugeordneten Zertifikats erforderlich. Hierzu wird ein Zertifikatspfad ermittelt, anhand dessen die Zertifikatskettenprüfung zur Validierung des betreffenden Zertifikats vorgenommen wird.

Für die Durchführung von Zertifikatskettenprüfungen gibt es verschiedene internationale Standards, wie zum Beispiel RFC3280 und ISIS-MTT, vgl, "Common ISIS-MTT Specifications for interoperable PKI applications" from T7 & Teletrust, Specification, Version 1.1, 16. März 2004.

Aus dem Stand der Technik Ist es ferner bekannt, dass für die Durchführung von Zertifikatskettenprüfungen auch Zertifikatswiderrufinformationen berücksichtigt werden müssen. Mit Hilfe von Zertifikatswiderrufinformationen werden solche Zertifikate identifiziert, die vor dem Ablauf ihrer Gültigkeitsdauer aus dem Verkehr gezogen werden müssen, weil es beispielsweise zu einer Unregelmäßigkeit gekommen Ist, die die Vertrauenswürdigkeit des Zertifikats negativ beeinflusst. Zertifikatswiderrufinformationen können in der Form von so genannten Certificate Revocation Lists (CRLs) zur Verfügung gestellt werden. Ein Format für solche CRLs ist beispielsweise in der RFC3280 spezifiziert; von diesem Format macht auch der ISIS-MTT Standard Gebrauch.

Aus der EP 1 653 655 B1 ist ein System zur Verifizierung von digitalen Signaturen von Zertifikaten bekannt. Zur Prüfung der Zertifikate werden diese von einem Lightweight Directory Access Protocol (LDAP) Server abgefragt; die Zertifikatswiderrufinformation wird mit Hilfe eines Online Certificate Status Protokol (OCSP) Server geprüft. Um eine schnelle Überprüfung von Zertifikaten auf kleinen Geräten, wie z.B. mobilen Geräten, zu ermöglichen, werden verschiedene Informationen, die zur Verifikation von digitalen Signaturen benötigt werden, zur Wiederverwendung gespeichert. Dieses Verfahren ist nur für die Überprüfung der digitalen Signaturen von Zertifikaten anwendbar, nicht aber für die digitalen Signaturen von beliebigen Nachrichten. Ein weiterer Nachteil ist, dass die wieder verwendbaren Informationen lediglich in einem Cache Speicher gespeichert werden, so dass sie dort bereits nach kurzer Zeit nicht mehr zur Verfügung stehen.

Aus US 6,044,462 ist ein Verfahren zur Feststellung des Gültigkeitsstatus eines Zertifikats mithilfe von Certificate Revocation Lists bekannt, wobei eine Datenbank erzeugt wird, die die Statushistorie beinhaltet.

Aus EP 1 701 282 A1 ist ein Computersystem zur Signaturverifizierung bekannt.

Aus US 2005/0278534 A1 ist ein Verfahren zur Zertifikatskettenprüfung bekannt.

Aus US 6,442,688 B1 ist ein Verfahren zur Aktualisierung von Zertifikaten bekannt.

Der Erfindung liegt demgegenüber die Aufgabe zugrunde, ein Datenverarbeitungssystem, ein Datenverarbeitungsverfahren und ein Computerprogrammprodukt für eine verbesserte Zertifikatskettenprüfung zu schaffen.

Die der Erfindung zugrunde liegenden Aufgaben werden jeweils mit den Merkmalen der unabhängigen Patentansprüche gelöst. Ausführungsformen der Erfindung sind den abhängigen Patentansprüchen angegeben.

Erfindungsgemäß wird ein Datenverarbeitungssystem mit Mitteln zur Durchführung von Zertifikatskettenprüfungen, einer Datenbank zur Speicherung von durch die Mittel zur Durchführung von Zertifikatskettenprüfungen ermittelten Prüfergebnissen, und Mitteln zur Prüfung von digitalen Signaturen geschaffen, wobei das Prüfergebnis einer Zertifikatskettenprüfung durch Zugriff auf die Datenbank abgerufen wird.

Die Speicherung der Prüfergebnisse in einer Datenbank ist besonders vorteilhaft, da es hierdurch ermöglicht wird, die Zertifikatskettenprüfungen und die Prüfungen von digitalen Signaturen in asynchronen Prozessen durchführen zu können. Hierdurch wird die Verarbeitung z.B. von eingehenden signierten Nachrichten erheblich beschleunigt.

Ferner ist besonders vorteilhaft, dass die Durchführung von Zertifikatskettenprüfungen unabhängig von der Überprüfung digitaler Signaturen erfolgen kann. Hierzu werden beispielsweise die Zertifikate einer Gruppe von Teilnehmern einer Zertifikatskettenprüfung unterzogen. Die Prüfergebnisse werden in einer Datenbank gespeichert. Wenn eine digitale Signatur eines der Teilnehmer zu überprüfen ist, muss die Zertifikatskettenprüfung nicht erneut durchgeführt werden, sondern es wird lediglich auf die Datenbank zugegriffen, um das Prüfergebnis der zuvor erfolgten Zertifikatskettenprüfung abzufragen. Aufgrund dessen lässt sich die für die vollständige Prüfung einer einzelnen digitalen Signatur erforderliche Zeit verkürzen.

Nach einer Ausführungsform der Erfindung wird der Prüfergebnisse der Zertifikatskettenprüfungen mit einem Zugriffsschlüssel des betreffenden Zertifikats in der Datenbank gespeichert. Ein späterer Datenbankzugriff erfolgt dann im Rahmen der Signaturprüfung mit dem Zugriffsschlüssel des zu der digitalen Signatur gehörenden Zertifikats.

Nach einer Ausführungsform der Erfindung beinhaltet das Zertifikat eine Kennung des Herausgebers des Zertifikats und eine Seriennummer. Bei der Kennung kann es sich zum Beispiel um den so genannten Distinguished Name des Herausgebers, d.h. einer so genannten Certification Authority (CA), handeln. Durch die Kombination des Distinguished Name und der Seriennummer des Zertifikats erhält man für das Zertifikat einer gegebenen PKI einen global eindeutigen Schlüssel.

Nach einer Ausführungsform der Erfindung beinhalten die Zertifikate der PKI einen eindeutigen Schlüssel. Dieser eindeutige Schlüssel der Zertifikate wird als Zugriffschlüssel für die Speicherung der Prüfergebnisse in der Datenbank verwendet.

Nach einer Ausführungsform der Erfindung erfolgen die Zertifikatskettenprüfungen und die Überprüfungen der digitalen Signaturen in asynchronen Prozessen. Unter "asynchron" wird hier insbesondere verstanden, dass die Prozesse unabhängig voneinander gestartet werden können. Beispielsweise wird ein erster Prozess für die Zertifikatskettenprüfungen innerhalb gewisser Zeitabstände für die Aktualisierung der Datenbank gestartet, wohingegen ein zweiter Prozess zur Prüfung einer digitalen Signatur nach Bedarf gestartet wird, beispielsweise also jedes Mal, wenn eine signierte Nachricht empfangen wird. Dies hat den Vorteil, dass die Überprüfung von digitalen Signaturen unabhängig von einer unter Umständen parallel ablaufenden Durchführung von Zertifikatskettenprüfungen und/oder Aktualisierungen der Datenbank erfolgen kann, so dass die Verarbeitung der Nachrichten erheblich beschleunigt werden kann.

Nach einer Ausführungsform der Erfindung beinhalten die Zertifikate eine Angabe zu deren Gültigkeitsdauer. Wenn ein Zertifikat als Ergebnis der Zertifikatskettenprüfung den Status "gültig" erhält, wird in dem entsprechenden Eintrag in der Datenbank neben dem Status "gültig" auch die Gültigkeitsdauer, die sich aus dem Zertifikat ergibt, gespeichert. Dies hat den Vorteil, dass zur Prüfung einer digitalen Signatur durch Zugriff auf den betreffenden Eintrag in der Datenbank auch geprüft werden kann, ob die Gültigkeitsdauer des Zertifikats noch nicht überschritten ist.

Ein weiterer Vorteil ist, dass diejenigen Eintragungen in der Datenbank mit einer Gültigkeitsdauer, die vor dem Ablauf steht oder die bereits abgelaufen ist, zum Beispiel durch eine entsprechende Filterfunktion selektiert werden können. Hinsichtlich dieser Eintragungen können die betreffenden Teilnehmer benachrichtigt werden, um erneuerte oder verlängerte Zertifikate anzufordern, anhand derer die Datenbank dann aktualisiert werden kann.

Nach einer Ausführungsform der Erfindung hat das Datenverarbeitungssystem eine Netzwerkschnittstelle, um signierte Nachrichten von den Teilnehmern zu empfangen.

Die Nachrichten können beispielsweise Bestelldaten beinhalten oder andere Angaben zur Durchführung einer Transaktion. Dies ist insbesondere für Anwendungen im so genannten eCommerce vorteilhaft.

Nach einer Ausführungsform der Erfindung beinhalten die Nachrichten Personalisierungsdaten, zum Beispiel für die Personalisierung von Dokumenten-Rohlingen. Beispielsweise handelt es sich bei den Teilnehmern um Behörden, die für die Ausstellung von Personalausweisen, Reisepässen, Führerscheinen oder dergleichen zuständig sind. Solche Behörden können an das Datenverarbeitungssystem Bestellungen für die Herstellung solcher Dokumente richten, wobei die Bestellungen die entsprechenden Personalisierungsdaten beinhalten.

Nach einer Ausführungsform der Erfindung sind die Mittel zur Durchführung von Zertifikatskettenprüfungen und die Datenbank in einer Hochsicherheitsumgebung angeordnet. Um höchsten Sicherheitsanforderungen gerecht zu werden, ist jeder Zugriff von außen auf die in der Hochsicherheitsumgebung befindliche Datenbank ausgeschlossen. Die Datenbank der Hochsicherheitsumgebung wird repliziert, wobei sich die Replik außerhalb der Hochsicherheitsumgebung befindet, beispielsweise in einer Umgebung mit etwas geringeren Sicherheitsanforderungen als denen der Hochsicherheitsumgebung. Im Rahmen der Prüfung einer digitalen Signatur wird dann auf die Replik der Datenbank und nicht unmittelbar auf die Datenbank zugegriffen.

In einem weiteren Aspekt betrifft die Erfindung ein Datenverarbeitungsverfahren mit einem ersten Prozess zur Durchführung von Zertifikatskettenprüfungen und einem zweiten Prozess zur Prüfung von digitalen Signaturen, wobei der erste Prozess die folgenden Schritte beinhaltet: Durchführung von Zertifikatskettenprüfungen, Speicherung der aufgrund der Durchführung der Zertifikatskettenprüfungen gewonnenen Prüfergebnisse in einer Datenbank, und wobei der zweite Prozess die folgenden Schritte beinhaltet: Eingabe einer zu prüfenden digitalen Signatur, und Zugriff auf die Datenbank, um eines der Prüfergebnisse auszulesen, welches für ein Zertifikat in der Datenbank gespeichert ist, das der zu prüfenden Signatur zugeordnet ist.

In einem weiteren Aspekt betrifft die Erfindung ein Computerprogrammprodukt, wie zum Beispiel ein digitales Speichermedium oder eine ausführbare Datei, mit Programminstruktionen zur Ausführung eines solchen Datenverarbeitungsverfahrens.

Im Weiteren werden Ausführungsformen der Erfindung mit Bezugnahme auf die Zeichnung näher erläutert. Es zeigen:
- Figur 1: ein Blockdiagramm einer ersten Ausführungsform eines erfindungsgemäßen Datenverarbeitungssystems,
- Figur 2: ein Flussdiagramm einer Ausführungsform eines erfindungsgemäßen Verfahrens zur Generierung der Datenbank mit den Prüfergebnissen der Zertifikatskettenprüfungen,
- Figur 3: ein Flussdiagramm einer Ausführungsform eines erfindungsgemäßen Verfahrens zur Aktualisierung der Datenbank anhand von Zertifikatswiderrufinformationen,
- Figur 4: ein Flussdiagramm einer Ausführungsform eines erfindungsgemäßen Verfahrens zur Überprüfung einer signierten Anforderung,
- Figur 5: ein Blockdiagramm einer weiteren Ausführungsform eines erfindungsgemäßen Datenverarbeitungssystems zur Verarbeitung von Personalisierungsinformationen.

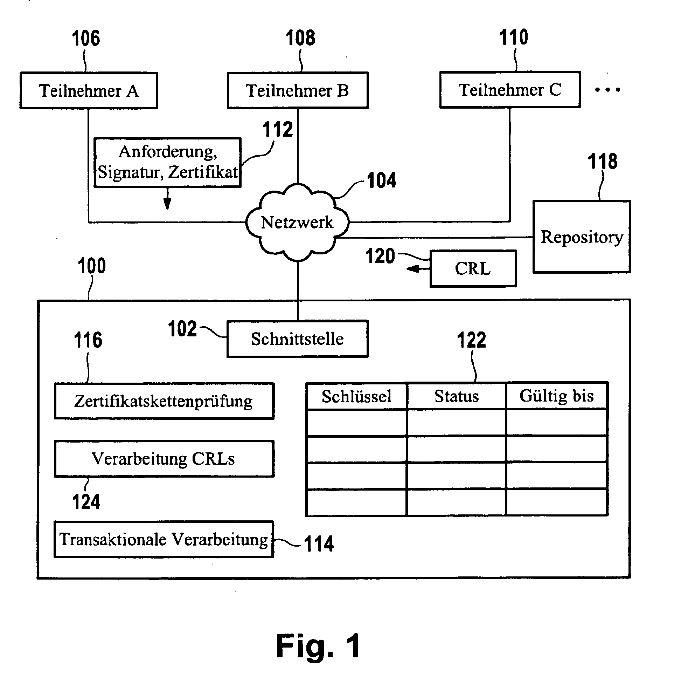

Die Figur 1 zeigt ein Datenverarbeitungssystem 100 mit einer Schnittstelle 102 für ein Netzwerk 104. Bei dem Netzwerk 104 kann es sich um das Internet, ein Intranet oder ein anderes Computernetzwerk handeln.

Verschiedene Teilnehmer können über das Netzwerk 104 mit dem Datenverarbeitungssystem 100 kommunizieren. Hierzu sind beispielsweise die Computer 106, 108, 110, ... der Teilnehmer A, B, C, ... mit dem Netzwerk 104 verbunden.

Beispielsweise kann der Teilnehmer A eine Nachricht 112 von seinem Computer 106 an das Datenverarbeitungssystem 100 über das Netzwerk 104 senden. Die Nachricht 112 kann eine Anforderung des Teilnehmers A an das Datenverarbeitungssystem 100 beinhalten, wie zum Beispiel eine Bestellung für eine Ware oder eine Dienstleistung.

Die Nachricht 112 beinhaltet eine digitale Signatur, beispielsweise der Anforderung, eines Teils oder der gesamten Nachricht 112, und ein PKI-Zertifikat, welches den öffentlichen Schlüssel beinhaltet, der dem privaten Schlüssel des Teilnehmers A zugeordnet ist, mit Hilfe dessen der Teilnehmer A die digitale Signatur der Nachricht 112 erzeugt hat.

Das Zertifikat muss nicht zwingend als Teil der Nachricht 112 von dem Computer 106 des Teilnehmers A durch das Datenverarbeitungssystem 100 empfangen werden. Alternativ kann das Zertifikat von dem Datenverarbeitungssystem 100 von einem öffentlichen Verzeichnis-Server, einem so genannten Directory (nicht gezeigt in der Figur 1), abgerufen werden, indem die Zertifikate verschiedener Teilnehmer zum Abruf über das Netzwerk 104 bereitgehalten werden. Ferner ist es auch möglich, dass das Zertifikat in dem Datenverarbeitungssystem 100 bereits gespeichert ist. Dies kann insbesondere dann der Fall sein, wenn die Nutzung des Datenverarbeitungssystems 100 eine vorherige Registrierung der Teilnehmer voraussetzt. Im Rahmen der Registrierung können dann die Zertifikate der betreffenden Teilnehmer an das Datenverarbeitungssystem 100 übertragen und dort für eine spätere Verwendung abgespeichert werden.

Das Datenverarbeitungssystem 100 hat eine Programmkomponente 114 für eine transaktionale Verarbeitung der mit der Nachricht 112 empfangenen Anforderung. Beispielsweise ist die Programmkomponente 114 zur Auslösung eines logistischen Prozesses ausgebildet, um eine in der Anforderung spezifizierte Ware herzustellen und/oder an den Teilnehmer A zu liefern. Die Programmkomponente 114 kann auch zur Durchführung einer finanziellen Transaktion, wie zum Beispiel für den Kauf oder Verkauf von Wertpapieren, Zahlungen oder anderen elektronischen Transaktionen des eCommerce ausgebildet sein.

Bevor die Anforderung durch die Programmkomponente 114 verarbeitet werden kann, muss diese zunächst auf deren Vertrauenswürdigkeit und erforderlichenfalls auf die Erfüllung der Bestimmungen des anwendbaren Signaturgesetzes geprüft werden.

Das Datenverarbeitungssystem 100 beinhaltet eine Programmkomponente 116 für die Durchführung von Zertifikatskettenprüfungen beispielsweise nach dem ISIS-MTT Standard. Das Ergebnis einer solchen Zertifikatskettenprüfung ist der aktuelle Status des geprüften Zertifikats, d.h. "gültig" oder "ungültig". Für den Fall, dass das Zertifikat als "gültig" erkannt worden ist, ist noch die in dem Zertifikat angegebene Gültigkeitsdauer von Interesse.

Für die Durchführung von Zertifikatskettenprüfungen lädt das Datenverarbeitungssystem 100 Zertifikatswiderrufinformationen über das Netzwerk 104. Beispielsweise werden solche Zertifikatswiderrufinformationen in Form von CRLs in einen Repository 118 in vorgegebenen zeitlichen Abständen bereitgestellt. Ein solches Repository 118 wird auch als LDAP CRL Server bezeichnet (LDAP = Light Weigh Directory Access Protocoll).

Die Figur 1 zeigt beispielhaft die Übertragung einer Certificate Revocation List (CRL) 120 von dem Repository 118 an das Datenverarbeitungssystem 100. Die Zertifikatskettenprüfung wird von der Programmkomponente 116 unter Berücksichtigung der von dem Repository 118 empfangenen CRLs durchgeführt. Das Ergebnis einer solchen Zertifikatskettenprüfung wird in einer Datenbank 122 des Datenverarbeitungssystems 100 gespeichert. Jeder Eintrag in der Datenbank 122 besteht aus einem Zugriffschlüssel ("Schlüssel"), einer Status-Information (Status") und einer Gültigkeitsdauer ("gültig bis"), wenn der Status = "gültig" ist.

Jeder Eintrag in der Datenbank 122 bezieht sich dabei auf ein durch die Programmkomponente 116 überprüftes Zertifikat. Der Zugriffschlüssel kann aus dem Zertifikat selbst gewonnen werden.

Beispielsweise werden Zertifikate verwendet, die eine eindeutige Kennung des Herausgebers des Zertifikats, der so genannten Certification Authority (CA), beinhalten. Diese Kennung wird auch als "Distinguished Name" bezeichnet. Zusätzlich hat das Zertifikat eine Seriennummer der CA. Durch Angabe des Distinguished Names und der Seriennummer ist das betreffende Zertifikat also eindeutig identifiziert, sodass man durch Kombination des Distinguished Names mit einer Seriennummer einen eindeutigen Zugriffschlüssel erhält. Alternativ können auch Zertifikate verwendet werden, die eine in der PKI global eindeutige Kennung tragen. In diesem Fall kann die global eindeutige Kennung unmittelbar als Zugriffschlüssel verwendet werden.

Für die initiale Erzeugung der Datenbank 122 wird so vorgegangen, dass die Zertifikate der in Frage kommenden Teilnehmer A, B, C, ... durch die Programmkomponente 116 einer Zertifikatskettenprüfung unterzogen werden. Die Ergebnisse dieser Zertifikatskettenprüfungen werden in der Datenbank 122 gespeichert, indem für jedes geprüfte Zertifikat dort eine Eintragung hinterlegt wird. Mit Hilfe des aus dem Zertifikat gewonnenen Zugriffschlüssels kann auf den betreffenden Eintrag zu einem späteren Zeitpunkt wieder zugegriffen werden.

Die Gruppe der Teilnehmer A, B, C, ... kann fest vorgegeben sein, insbesondere wenn das Datenverarbeitungssystem 100 eine vorherige Registrierung der Teilnehmer erfordert. In diesem Fall werden die Zertifikate der registrierten Teilnehmer beispielsweise anlässlich deren Registrierung einer Zertifikatskettenprüfung durch die Programmkomponente 116 unterzogen, um die entsprechenden Ergebnisse in der Datenbank 122 abzuspeichern.

Falls die Gruppe der in Frage kommenden Teilnehmer nicht oder nicht genau bekannt ist, kann auch anders vorgegangen werden, indem beispielsweise sämtliche oder ein Teil der Zertifikate aus einem öffentlich zugänglichen Directory in das Datenverarbeitungssystem 100 heruntergeladen werden, um diese mittels der Programmkomponente 116 einer Zertifikatskettenprüfung zu unterziehen.

Das Datenverarbeitungssystem 100 hat eine weitere Programmkomponente 124 zur Verarbeitung der CRLs, um die Datenbank 122 zu aktualisieren. Wenn das Datenverarbeitungssystem 100 beispielsweise die CRL 120 empfängt, so ermittelt die Programmkomponente 124 für jedes in der CRL 120 identifizierte Zertifikat dessen Zugriffschlüssel. Mit den so ermittelten Zugriffschlüsseln greift die Programmkomponente 124 dann auf die Datenbank 122 zu, um den jeweiligen Status zu aktualisieren, falls bereits ein entsprechender Eintrag in der Datenbank 122 existiert.

Wenn beispielsweise in der Datenbank 122 für ein Zertifikat der Status "gültig" gespeichert ist, so wird dieser Status auf "ungültig" gesetzt, wenn das betreffende Zertifikat in der CRL 120 beinhaltet ist. Mit dem Zugriffschlüssel dieses Zertifikats greift die Programmkomponente 124 hierzu auf die Datenbank 122 zu, um in der betreffenden Eintragung den Status auf "ungültig" zu setzen.

Durch die Programmkomponenten 116 und 124 einerseits und die Programmkomponente 114 andererseits werden zwei asynchron und unabhängig voneinander ablaufende Datenverarbeitungsprozesse implementiert: Durch die Programmkomponenten 116 und 124 wird die Datenbank 122 generiert bzw. aktualisiert, wohingegen sich die Programmkomponente 114 der Datenbank 122 bedient, um durch einen Datenbankzugriff den Status eines Zertifikats im Rahmen einer Signaturprüfung abzufragen, um anschließend nach erfolgreicher Überprüfung der Signatur die Anforderung zum Beispiel des Teilnehmers A (vgl. Nachricht 112) transaktional zu verarbeiten.

In Betrieb des Datenverarbeitungssystems 100 wird also die Datenbank 122 für eine Gruppe von Teilnehmern, zum Beispiel für registrierte Teilnehmer, generiert und in zeitlichen Intervallen aktualisiert, indem die Zertifikate dieser Teilnehmer durch die Programmkomponente 116 einer Zertifikatskettenprüfung unterzogen und die Ergebnisse dieser Prüfung als Eintragungen in der Datenbank 122 gespeichert werden.

Wenn das Datenverarbeitungssystem 100 von einem der registrierten Teilnehmer A, B, C, ... eine signierte Nachricht erhält, wie zum Beispiel die Nachricht 112 von dem Teilnehmer A, so muss für die Überprüfung der Signatur dieser Nachricht 112 nicht erneut eine Zertifikatskettenprüfung durchgeführt werden. Im Gegenteil muss lediglich der Zugriffschlüssel des Zertifikats der digitalen Signatur der Nachricht 112 ermittelt werden, beispielsweise aus dem Distinguished Name der CA und der Seriennummer des Zertifikats, um mit diesem Zugriffschlüssel auf die Datenbank 122 zuzugreifen.

Wenn der in der betreffenden Eintragung gespeicherte Status "gültig" ist und der aktuelle Zeitpunkt vor dem Ablauf der Gültigkeitsdauer, die ebenfalls in der Eintragung angegeben ist, liegt, so wird das Zertifikat der digitalen Signatur als valide betrachtet. Wenn die digitale Signatur auch sonst in Ordnung ist, sich also mit dem in dem Zertifikat angegebenen öffentlichen Schlüssel entschlüsseln und verifizieren lässt, so ist die Signaturprüfung damit bereits erfolgreich abgeschlossen und die Anforderung kann durch die Programmkomponente 114 verarbeitet werden.

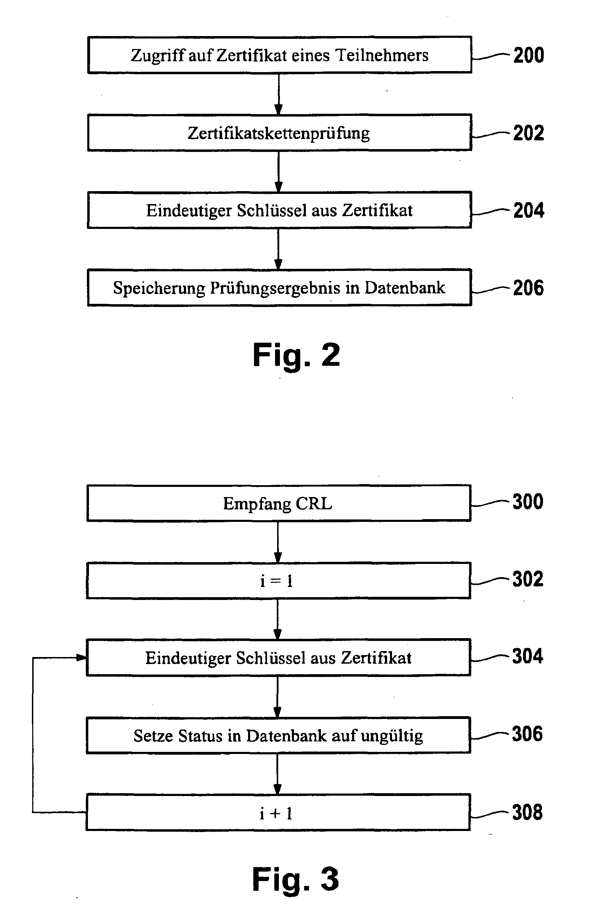

Die Figur 2 zeigt ein Flussdiagramm, welches der Arbeitsweise der Programmkomponente 116 für die Durchführung von Zertifikatskettenprüfungen entspricht. Die Figur 2 zeigt dabei die Vorgehensweise zur Erzeugung eines einzelnen Eintrags in der Datenbank (vgl. Datenbank 122 der Figur 1), der einem Zertifikat eines der Teilnehmers entspricht.

In dem Schritt 200 erfolgt ein Zugriff auf das Zertifikat eines der Teilnehmer, beispielsweise also eines registrierten Teilnehmer. Das Zertifikat kann von dem Teilnehmer im Rahmen seiner Registrierung an das Datenverarbeitungssystem übertragen werden oder es kann aus einem öffentlichen Verzeichnisserver abgerufen werden. Das Zertifikat des Teilnehmers wird dann in dem Schritt 202 einer Zertifikatskettenprüfung unterzogen, beispielsweise nach ISIS-MTT und/oder RFC3280.

In dem Schritt 204 wird dann aus dem Zertifikat ein eindeutiger Schlüssel gewonnen, beispielsweise durch Kombination des Distinguished Name der CA und der Seriennummer des Zertifikats. Alternativ kann auch aus anderen persönlichen Daten des Teilnehmers ein solcher Schlüssel gewonnen werden.

In dem Schritt 206 wird das Prüfergebnis der in dem Schritt 202 durchgeführten Zertifikatskettenprüfung in der Datenbank mit dem in dem Schritt 204 gewonnenen Zugriffschlüssel gespeichert. Die betreffende Eintragung in der Datenbank beinhaltet zumindest den Zugriffschlüssel, den Status des Zertifikats und dessen Gültigkeitsdauer.

Wenn die Datenbank als relationale Datenbank ausgebildet ist, kann der Zugriffschlüssel als so genannter Primary Key ausgebildet sein.

Die Schritte 200 bis 206 werden für die Zertifikate aller registrierter Teilnehmer durchgeführt, um so die Datenbank 122 initial zu generieren.

Die Figur 3 zeigt ein Flussdiagramm, das der Arbeitsweise der Programmkomponente 124 der Figur 1 zur Aktualisierung der Datenbank 122 entspricht. In dem Schritt 300 wird eine CRL (vgl. zum Beispiel die CRL 120 der Figur 1) von dem Datenverarbeitungssystem empfangen. Die CRL beinhaltet ungültig gewordene Zertifikate oder Angaben, die zur eindeutigen Identifizierung dieser Zertifikate ausreichend sind.

Beispielsweise beinhaltet also die CRL die Zertifikate selbst oder den Distinguished Name der CA mit der Seriennummer des betreffenden Zertifikats oder eine andere eindeutige Zertifikatskennung. Die Liste der ungültig gewordenen Zertifikate wird nun der Reihe nach abgearbeitet, indem in dem Schritt 302 ein Laufindex i initialisiert wird. In dem Schritt 304 wird ein eindeutiger Schlüssel aus dem Zertifikat i der CRL gewonnen, wenn das Zertifikat selbst Teil der CRL ist, oder es wird aus den Angaben in der CRL, die das Zertifikat eindeutig identifizieren, der Zugriffschlüssel ermittelt.

Mit diesem Zugriffschlüssel erfolgt in dem Schritt 306 ein Zugriff auf die Datenbank, um den Status in der betreffenden Eintragung auf "ungültig" zu setzen. In dem Schritt 308 wird der Index i inkrementiert, um das nächste Zertifikat der CRL zu verarbeiten, so lange bis sämtliche in der CRL identifizierten Zertifikate zur Aktualisierung der Datenbank abgearbeitet worden sind.

Zur Aktualisierung der Datenbank können ferner zum Beispiel durch eine Filterfunktion diejenigen Eintragungen ermittelt werden, deren Gültigkeitsdauer kurz vor dem Ablauf steht oder die bereits abgelaufen ist. Beispielsweise wird einmal täglich eine Datenbankabfrage der Datenbank 122 durchgeführt, um diejenigen Eintragungen zu ermitteln, deren Gültigkeitsdauer kurz nach dem aktuellen Zeitpunkt oder vor dem aktuellen Zeitpunkt der Durchführung der Datenabfrage abläuft bzw. abgelaufen ist. Die betreffenden Teilnehmer können dann automatisch zum Beispiel per E-Mail hierüber informiert und aufgefordert werden, ihre Zertifikate zu erneuern. Die erneuerten Zertifikate werden dann durch die Programmkomponente 116 einer Zertifikatskettenprüfung unterzogen und die Prüfergebnisse in der Datenbank 122 abgespeichert, wobei die Eintragungen der abgelaufenen Zertifikate durch die neuen Eintragungen ersetzt werden können.

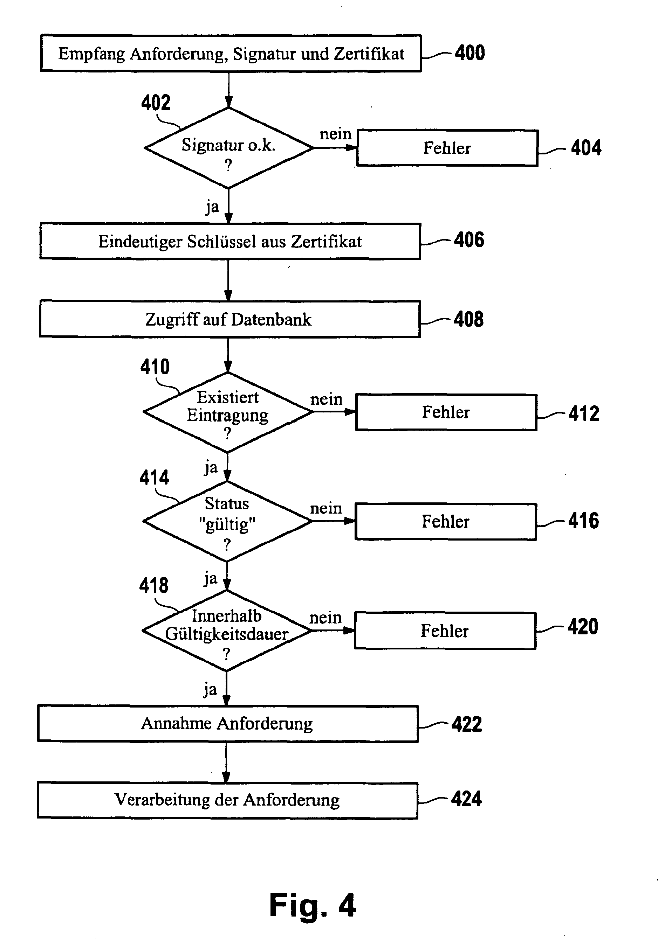

Die Figur 4 zeigt ein Flussdiagramm einer Ausführungsform eines erfindungsgemäßen Verfahrens zur Prüfung einer von einem der Teilnehmer empfangenen signierten Anforderung. In dem Schritt 400 wird die signierte Anforderung zum Beispiel in Form einer E-Mail oder einer anderen elektronischen Nachricht durch das Datenverarbeitungssystem von dem Teilnehmer empfangen. Zusammen mit der Anforderung kann das Zertifikat des Teilnehmers empfangen werden. Das Zertifikat kann aber auch bereits in dem Datenverarbeitungssystem gespeichert sein oder es kann von einem externen Verzeichnisserver abgerufen werden.

In dem Schritt 402 wird durch das Datenverarbeitungssystem ein Versuch unternommen, mit Hilfe des in dem Zertifikat beinhalteten öffentlichen Schlüssels des Teilnehmers die Signatur zu entschlüsseln. Falls dieser Versuch gelingt, wird in dem Schritt 402 die Signatur als solche als in Ordnung betrachtet und die Ablaufsteuerung geht zu dem Schritt 406 über. Im gegenteiligen Fall wird die Signatur als ungültig betrachtet und in dem Schritt 404 wird eine Fehlermeldung abgegeben. Eine entsprechende Nachricht mit der Fehlermeldung kann von dem Datenverarbeitungssystem generiert und an den Teilnehmer, von dem die ungültige Signatur empfangen worden ist, gesendet werden.

In dem Schritt 406 gewinnt das Datenverarbeitungssystem aus dem Zertifikat den Zugriffschlüssel, zum Beispiel durch Kombination des in dem Zertifikat angegebenen Distinguished Name der CA und der Seriennummer des Zertifikats. In dem Schritt 408 erfolgt ein Zugriff auf die Datenbank (vgl. Datenbank 122 der Figur 1), in der die Ergebnisse des asynchron ablaufenden Datenverarbeitungsprozesses der Zertifikatskettenprüfungen gespeichert sind.

In dem Schritt 410 wird geprüft, ob ein Datenbankeintrag unter dem in dem Schritt 406 gewonnenen Zugriffschlüssel existiert. Ist dies nicht der Fall, so kann in dem Schritt 412 eine Fehlermeldung abgegeben werden, die von dem Datenverarbeitungssystem an den betreffenden Teilnehmer übertragen werden kann. Dies ist insbesondere dann der Fall, wenn der Teilnehmer unbekannt ist; wenn der Teilnehmer bereits bekannt ist, kann eine automatische oder manuelle Übernahme des Zertifikats erfolgen.

Wenn hingegen ein solcher Eintrag in der Datenbank existiert, wird der in dem Eintrag angegebene Status in dem Schritt 414 geprüft. Wenn der Status "gültig" ist, geht die Ablaufsteuerung zu dem Schritt 418 über. Ist das Gegenteil der Fall, so wird in dem Schritt 416 eine Fehlermeldung abgegeben, die an den betreffenden Teilnehmer übertragen werden kann.

In dem Schritt 418 wird geprüft, ob die in der Eintragung angegebene Gültigkeitsdauer überschritten worden ist. Wenn der aktuelle Zeitpunkt nicht mehr oder noch nicht innerhalb der Gültigkeitsdauer liegt, so wird in dem Schritt 420 eine Fehlermeldung abgegeben, die an den Teilnehmer übertragen werden kann. Ist das Gegenteil der Fall, so ist die Signaturprüfung einschließlich der Prüfung der Validität des der Signatur zugeordneten Zertifikats erfolgreich abgeschlossen und die Signatur wird insgesamt als gültig betrachtet.

Daraufhin wird in dem Schritt 422 die Anforderung des Teilnehmers von dem Datenverarbeitungssystem angenommen. Der Teilnehmer kann in dem Schritt 422 eine Bestätigung von dem Datenverarbeitungssystem erhalten. In dem Schritt 424 wird die Anforderung dann verarbeitet, indem beispielsweise die in der Anforderung spezifizierte Transaktion durchgeführt wird und/oder ein logistischer Prozess initiiert wird und/oder die Daten der Anforderung an eine Produktionsumgebung übertragen werden, um den in der Anforderung spezifizierten Gegenstand herzustellen.

Die vorliegende Erfindung ist besonders vorteilhaft, wenn die Anforderung zeitkritisch ist und/oder wenn das Datenverarbeitungssystem eine große Anzahl von Anforderungen pro Zeiteinheit erhält:
Wenn die Anforderung zeitkritisch ist, so hat die erfindungsgemäße Validitätsprüfung des Zertifikats durch einen asynchron ablaufenden Datenverarbeitungsprozess den Vorteil, dass für die Prüfung der Validität des der Signatur zugeordneten Zertifikats der Anforderung lediglich ein Datenbankzugriff erforderlich ist. Die für den Datenverarbeitungsprozess bezüglich der Prüfung der Anforderung erforderliche Zeit kann also im Vergleich zum Stand der Technik wesentlich verkürzt werden. Dies kann vorteilhaft sein, wenn die Transaktion zum Beispiel den Kauf oder Verkauf von Wertpapieren betrifft, da es hier besonders auf eine schnelle Abwicklung ankommt.

Wenn das Datenverarbeitungssystem eine relativ große Anzahl von Anforderungen pro Zeiteinheit erhält, ist die vorliegende Erfindung ebenfalls besonders vorteilhaft, da zur Verarbeitung dieser Anforderungen die zur Verfügung stehenden Ressourcen des Datenverarbeitungssystems erfindungsgemäß besonders effizient eingesetzt werden können. Ein erfindungsgemäß ausgestaltetes Datenverarbeitungssystem kann also mit einer relativ geringen Prozessorleistung eine relative große Anzahl von Anforderungen verarbeiten, da die Validitätsprüfung der Zertifikate und die Signaturprüfung im Einzelfall in gesonderten Datenverarbeitungsprozessen ablaufen.

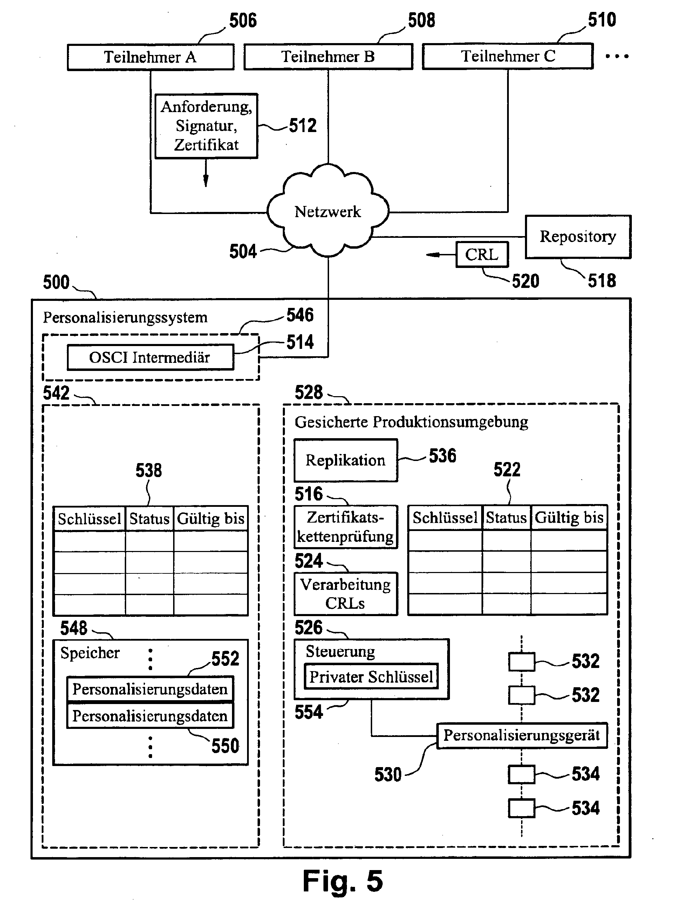

Die Figur 5 zeigt ein Blockdiagramm einer weiteren Ausführungsform des Datenverarbeitungssystems der Figur 1, wobei das Datenverarbeitungssystem der Figur 5 als Personalisierungssystem ausgebildet ist. Elemente der Figur 5, die Elementen der Figur 1 entsprechen, sind mit entsprechenden Bezugszeichen gekennzeichnet.

In der hier betrachteten Ausführungsform kann die Nachricht 512 beispielsweise ein Format einer erweiterbaren Auszeichnungssprache (Extensible Markup Language-XML) haben.

XML ist ein Standard zur Modulierung von semi-strukturierten Daten in Form einer Baumstruktur, der vom World Wide Web Konsortium (W3C) definiert wird. XML-Dateien können beispielsweise mit Hilfe von SOAP (Simple Object Access Protocol) übertragen werden.

SOAP ist ein Übertragungsprotokoll, mit Hilfe dessen Daten zwischen Systemen ausgetauscht und Remote Procedure Calls durchgeführt werden können. SOAP stützt sich auf die Dienste anderer Standards, insbesondere XML zur Repräsentation der Daten und einer Transportschicht, wie zum Beispiel Hypertext Transfer Protocol, d.h. HTTP oder HTTPS.

Ein SOAP-Envelope ist ein Container, der ein optionales Header-Element und ein Body-Element der SOAP-Nachricht enthält. Im Header-Element der SOAP-Nachricht werden die Metainformationen der Nachricht untergebracht. Diese können Informationen über das Routing der Nachricht, über eine eventuelle Verschlüsselung und/oder die Zugehörigkeit zu einer Transaktion umfassen.

In dem Body-Element der Nachricht sind die Nutzdaten untergebracht. Daran anschließend können mögliche Anhänge folgen, die in Abhängigkeit von dem Transportprotokoll an die Nachricht angehängt werden können, wie zum Beispiel durch Nutzung von MIME (Multipurpose Internet Mail Extension).

Das Personalisierungssystem 500 hat einen Empfänger 514 für die Nachrichten, die von den Teilnehmern über das Netzwerk 504 an das Personalisierungssystem 500 gesendet werden.

Der Empfänger 514 kann beispielsweise als so genannter Webservice ausgebildet sein. Dieser Webservice kann in einem Verzeichnisdienst, insbesondere einem so genannten UDDI (Universal Description, Discovery and Integration) veröffentlicht werden, sodass die Teilnehmer darauf zugreifen können, um die WSDL (Webservices Description Language) Datei dieses Webservices zu erhalten.

Alternativ oder zusätzlich kann durch den Empfänger 514 ein so genannter OSCI (Online Services Computer Interface) Intermediär implementiert sein.

Bei den Teilnehmern A, B, C, ... handelt es sich hier um die Service Consumer von Personalisierungsdiensten, die durch das Personalisierungssystem 500 erbracht werden können. Beispielsweise hat das Personalisierungssystem hierzu eine gesicherte Produktionsumgebung 528 mit einem Personalisierungsgerät 530, das zur Personalisierung von Dokumenten-Rohlingen 532 dient.

Die Dokumenten-Rohlinge 532 werden dem Personalisierungsgerät 530 über eine Fördervorrichtung zugeführt und in dem Personalisierungsgerät 530 personalisiert, sodass man die personalisierten Dokumente 534 erhält, die dann an die betreffenden Teilnehmer ausgegeben werden können.

Bei den Dokumenten 534 kann es sich beispielsweise um Personalausweise, Reisepässe, Führerscheine, Visa, Kreditkarten, Firmenausweise, Berechtigungsnachweise, Chipkarten oder andere Wert- oder Sicherheitsdokumente handeln.

Zum Schutz gegen Manipulationen bei der Personalisierung der Dokumenten-Rohlinge 532 ist die gesicherte Produktionsumgebung 528 vorzugsweise als Höchst-Sicherheitsumgebung ausgebildet. In der gesicherten Produktionsumgebung 528 werden die Programmkomponente 516 zur Zertifikatskettenprüfung und die Programmkomponente 524 zur Verarbeitung der CRLs ausgeführt; die Datenbank 522 ist ebenfalls in der gesicherten Produktionsumgebung 528 angeordnet, um Zugriffe von außen zu unterbinden.

Zur Implementierung eines Replikationsprozess wird in der gesicherten Produktionsumgebung 528 eine Programmkomponente 536 ausgeführt. Die Programmkomponente 536 dient zur Replikation der Datenbank 522 in eine Replik 538.

Die Replik 538 ist in einer Umgebung 542 angeordnet, die ebenfalls speziell gesichert ist, sodass unbefugte Dritte keinen Zutritt erlangen. Allerdings kann der Empfänger 514 auf die Replik 538 zugreifen.

Der Empfänger 514 ist in einer Umgebung 546 angeordnet, die ebenfalls zutrittsgesichert ist. Von außen können aber die Nachrichten 512 in die Umgebung 546 eingespeist werden. Dies bedeutet, dass die Umgebungen 546, 540 und 528 hinsichtlich deren Sicherheit gestaffelt sind, wobei die eigentliche Personalisierung in der Umgebung höchster Sicherheit stattfindet.

Bei der Anforderung, die mit der Nachricht 512 von dem Personalisierungssystem 500 empfangen wird, kann es sich beispielsweise um eine Bestellung von Reisepässen handeln. In diesem Fall beinhaltet die Anforderung die Personalisierungsdaten von denjenigen Bürgern, für die die Reisepässe hergestellt werden sollen, wie zum Beispiel Name, Anschrift, Geburtsdatum, Größe, etc. Falls es sich bei den Reisepässen um elektronische Reisepässe mit einem integrierten RFID-Chip handelt, beinhalten die Personalisierungsdaten zusätzlich biometrische Daten, wie zum Beispiel Fingerabdruck-Scann und/oder Iris-Scann-Daten der betreffenden Bürger.

Die Nachricht 512 wird von dem Empfänger 514 empfangen. Der Empfänger 514 prüft dann die Signatur der Nachricht 512 beispielsweise nach dem Verfahren gemäß Figur 4, wobei der Empfänger 514 auf die Replik 538 der Datenbank 522 zugreift (vgl. Schritt 408 der Figur 4).

Wenn als Ergebnis der Prüfung die Anforderung angenommen wird (vgl. Schritt 424 der Figur 4), so speichert der Empfänger 514 die in der Anforderung beinhalteten Personalisierungsdaten in einem Speicher 548, der in der Umgebung 542 angeordnet ist. Der Speicher 548 kann als Pufferspeicher ausgebildet sein, der beispielsweise nach einem First In First Out (FIFO) Prinzip arbeitet.

Beispielsweise empfängt das Personalisierungssystem 500 mit der Nachricht 512 verschlüsselte Personalisierungsdaten 550, die nach der Prüfung der Signatur der Nachricht 512 von dem Empfänger 514 in dem Speicher 548 abgelegt werden. Nachfolgend empfängt das Personalisierungssystem 500 von demselben oder einem anderen Teilnehmer eine weitere Nachricht mit anderen Personalisierungsdaten 552, die ebenso in dem Speicher 548 abgelegt werden.

Die Personalisierungsdaten 550, 552, ... liegen in dem Speicher 548 zur Abholung durch eine Steuerung 526 bereit. Die Steuerung 526 hat Zugriff auf einen privaten Schlüssel 554 der gesicherten Produktionsumgebung 528, wobei die Verschlüsselung der Personalisierungsdaten 550, 552, ... mit dem entsprechenden öffentlichen Schlüssel durch den betreffenden Teilnehmer, der die Personalisierungsdaten gesendet hat, erfolgte.

Die Steuerung 526 greift also auf den Speicher 548 zu, um von dort Personalisierungsdaten abzurufen. Die von der Steuerung 526 aus dem Speicher 548 ausgelesenen Personalisierungsdaten werden in der gesicherten Produktionsumgebung 528 mit Hilfe des privaten Schlüssels 554 entschlüsselt, um dementsprechend das Personalisierungsgerät 530 anzusteuern. Die durch die Umgebungen 542 und 528 zur Verfügung gestellten Funktionalitäten implementieren also einen Service-Provider für die Personalisierung von Dokumenten-Rohlingen für die Service-Consumer, d.h. die Teilnehmer A, B, C, ...

Die Replizierung der Datenbank 522 aus der gesicherten Produktionsumgebung 528 in die Umgebung 542 hat den besonderen Vorteil, dass kein Zugriff von außen in die gesicherte Produktionsumgebung 528 erfolgen muss, was sonst prinzipiell ein Sicherheitsrisiko darstellen würde, insbesondere da in der gesicherten Produktionsumgebung 528 der private Schlüssel 554 gespeichert ist. Die Verwendung der Datenbank 522 durch den außerhalb der gesicherten Produktionsumgebung 528 befindlichen Empfänger 514 ist dennoch ermöglicht, indem dieser auf die Replik 538 der Datenbank 522 in der Umgebung 542 zugreifen kann.

Von besonderem Vorteil ist ferner, dass die Zertifikatskettenprüfung und die Generierung der Datenbank 522 sowie deren Aktualisierung einerseits und die Personalisierung der Dokumenten-Rohlinge 532 andererseits in asynchronen Prozessen erfolgt, sodass die laufende Personalisierung der Dokumenten-Rohlinge nicht durch Zertifikatskettenprüfungen aufgehalten werden muss. Dies ermöglicht einen hohen Durchsatz des Personalisierungsgeräts 530.

### Bezugszeichenliste

- 100: Datenverarbeitungssystem
- 102: Schnittstelle
- 104: Netzwerk
- 106: Computer
- 108: Computer
- 110: Computer
- 112: Nachricht
- 114: Programmkomponente
- 116: Programmkomponente
- 118: Repository
- 120: CRL
- 122: Datenbank
- 124: Programmkomponente
- 500: Personalisierungssystem
- 504: Netzwerk
- 506: Computer
- 508: Computer
- 510: Computer
- 512: Nachricht
- 514: Empfänger
- 516: Programmkomponente
- 518: Repository
- 520: CRL
- 522: Datenbank
- 524: Programmkomponente
- 526: Steuerung
- 528: gesicherte Produktionsumgebung
- 530: Personalisierungsgerät
- 532: Dokumenten-Rohlinge
- 534: Dokumente
- 536: Programmkomponente
- 538: Replik

## Patentansprüche

1. Datenverarbeitungssystem mit
- Mitteln (116; 546) zur Durchführung von Zertifikatskettenprüfungen, wobei die Mittel zur Durchführung von Zertifikatskettenprüfungen in einer Hochsicherheitsumgebung (528) angeordnet sind,
- einer Datenbank (122; 522) zur Speicherung von durch die Mittel zur Durchführung von Zertifikatskettenprüfungen ermittelten Prüfergebnissen, wobei die Datenbank in der Hochsicherheitsumgebung angeordnet ist,
- einer Replik (538) der Datenbank, wobei die Replik außerhalb der Hochsicherheitsumgebung angeordnet ist,
- Mitteln (114; 514) zur Prüfung von digitalen Signaturen, wobei das Prüfergebnis einer Zertifikatskettenprüfung durch Zugriff auf die Replik der Datenbank abgerufen wird,
wobei jedes der Prüfergebnisse mit einem Zugriffsschlüssel des betreffenden Zertifikats in der Datenbank gespeichert ist, und wobei der Datenbankzugriff auf die Replik mit dem Zugriffsschlüssel des zu der digitalen Signatur gehörenden Zertifikats erfolgt.

2. Datenverarbeitungssystem nach Anspruch 1, wobei die Mittel zur Durchführung von Zertifikatskettenprüfungen und die Mittel zur Prüfung von digitalen Signaturen für eine asynchrone Arbeitsweise ausgebildet sind.

3. Datenverarbeitungssystem nach Anspruch 1 oder 2, wobei die Mittel zur Durchführung von Zertifikatskettenprüfungen zur Verarbeitung von Zertifikatswiderrufsinformationen (120; 520) ausgebildet sind, wobei die Zertifikatswiderrufinformationen ungültig gewordene Zertifikate identifizieren, wobei mit den Zugriffsschlüsseln der in den Zertifikatswiderrufinformationen identifizierten Zertifikaten auf die Datenbank zugegriffen wird, um die Datenbank zu aktualisieren.

4. Datenverarbeitungssystem nach einem der vorhergehenden Ansprüche, wobei die Gültigkeitsdauer eines aufgrund der Zertifikatskettenprüfung als gültig erkannten Zertifikats in der Datenbank gespeichert ist und mit Mitteln zur Ermittlung von Eintragungen in der Datenbank, deren Gültigkeitsdauer vor dem Ablauf steht oder bereits abgelaufen ist, um für entsprechende erneuerte Zertifikate die Zertifikatskettenprüfung erneut vorzunehmen.

5. Datenverarbeitungssystem nach einem der vorhergehenden Ansprüche mit Mitteln (102; 502, 541) zum Empfang von signierten Nachrichten einer Gruppe von Teilnehmern, wobei jedem der Teilnehmer ein Zertifikat zugeordnet ist, und wobei die Mittel zur Durchführung von Zertifikatskettenprüfungen zur Prüfung der den Teilnehmern zugeordneten Zertifikaten und zur Speicherung der Prüfergebnisse der Zertifikatskettenprüfung dieser Zertifikate in der Datenbank ausgebildet sind.

6. Datenverarbeitungssystem nach Anspruch 5, wobei die Nachrichten Personalisierungsdaten beinhalten, und mit Mitteln (526) zur Steuerung eines Personalisierungsgeräts (530) zur Personalisierung von Rohlingen mit Hilfe der Personalisierungsdaten.

7. Datenverarbeitungsverfahren mit einem ersten Prozess zur Durchführung von Zertifikatskettenprüfungen und einem zweiten Prozess zur Prüfung von digitalen Signaturen, wobei der erste Prozess die folgenden Schritte beinhaltet:
- Durchführung von Zertifikatskettenprüfungen in einer Hochsicherheitsumgebung (528),
- Speicherung der aufgrund der Durchführung der Zertifikatskettenprüfungen gewonnenen Prüfergebnisse in einer Datenbank (122; 522), wobei die Datenbank in der Hochsicherheitsumgebung angeordnet ist, wobei außerhalb der Hochsicherheitsumgebung eine Replik (538) der Datenbank angeordnet ist, und wobei der zweite Prozess die folgenden Schritte beinhaltet:
- Eingabe einer zu prüfenden digitalen Signatur (112; 512),
- Zugriff auf die Replik der Datenbank, um eines der Prüfergebnisse auszulesen, welches für ein Zertifikat in der Datenbank gespeichert ist, das der zu prüfenden Signatur zugeordnet ist,
wobei in dem ersten Prozess jedes der Prüfergebnisse mit einem Zugriffsschlüssel des betreffenden Zertifikats in der Datenbank gespeichert wird, und wobei in dem zweiten Prozess der Zugriffschlüssel des Zertifikats ermittelt wird, um den Datenbankzugriff auf die Replik durchzuführen.

8. Datenverarbeitungsverfahren nach Anspruch 7, wobei der erste Prozess und der zweite Prozess asynchron durchgeführt werden.

9. Datenverarbeitungsverfahren nach Anspruch 7 oder 8, wobei der erste Prozess die Aktualisierung der Datenbank aufgrund von Zertifikatswiderrufinformationen beinhaltet.

10. Datenverarbeitungsverfahren nach einem der vorhergehenden Ansprüche 7 bis 9, wobei die Gültigkeitsdauer eines aufgrund der Zertifikatskettenprüfung als gültig erkannten Zertificats in der Datenbank gespeichert wird und mit folgenden weiteren Schritten:
- Ermittlung der Eintragungen in der Datenbank, deren Gültigkeitsdauer vor dem Ablauf steht oder bereits abgelaufen ist,
- Ermittlung von erneuerten Zertifikaten, die die Zertifikate ersetzen, auf welche sich die ermittelten Eintragungen in der Datenbank beziehen,
- Durchführung von Zertifikatskettenprüfungen hinsichtlich der erneuerten Zertifikate und Speicherung der diesbezüglichen Prüfergebnisse in der Datenbank.

11. Verfahren nach einem der vorhergehenden Ansprüche 7 bis 10, wobei sich die Signatur auf eine von einem der Teilnehmer empfangene Nachricht bezieht, und wobei nach erfolgreicher Prüfung der Signatur eine transaktionale Verarbeitung der Nachricht erfolgt.

12. Computerprogrammprodukt zur Durchführung eines Datenverarbeitungsverfahrens nach einem der vorhergehenden Ansprüche 7 bis 11.

## Claims

1. A data processing system comprising
- means (116; 546) for carrying out certificate chain checking, wherein the means for carrying out certificate chain checking are arranged in a high-security environment (528),
- a database (122; 522) for storing check results determined by the means for carrying out certificate chain checking, wherein the database is arranged in the high-security environment,
- a replica (538) of the database, wherein the replica is arranged outside the high-security environment,
- means (114; 514) for checking digital signatures, wherein the check result of a certificate chain checking is retrieved by access to the replica of the database,
wherein each of the check results is stored in the database with an access key of the certificate in question, and wherein the database gains access to the replica by means of the access key of the certificate belonging to the digital signature.

2. The data processing system according to Claim 1, wherein the means for carrying out certificate chain checking and the means for checking digital signatures are configured for asynchronous operation.

3. The data processing system according to Claim 1 or 2, wherein the means for carrying out certificate chain checking are configured to process certificate revocation information (120; 520), wherein the certificate revocation information identifies certificates that have become invalid, wherein the database is accessed by means of the access keys of the certificates identified in the certificate revocation information, in order to update the database.

4. The data processing system according to one of the preceding claims, wherein the period of validity of a certificate identified as being valid on the basis of the certificate chain checking is stored in the database, and comprising means for determining entries in the database of which the period of validity is due to expire or has already expired, in order to again perform the certificate chain checking for corresponding renewed certificates.

5. The data processing system according to one of the preceding claims, comprising means (102; 502, 541) for receiving signed messages of a group of subscribers, wherein each of the subscribers is assigned a certificate, and wherein the means are configured to carry out certificate chain checking to check the certificates assigned to the subscribers and to store in the database the check results of the certificate chain checking of these certificates.

6. The data processing system according to Claim 5, wherein the messages contain personalisation data, and comprising means (526) for controlling a personalisation device (530) for personalising blanks with the aid of the personalisation data.

7. A data processing method comprising a first process for carrying out certificate chain checking and a second process for checking digital signatures, wherein the first process includes the following steps:
- carrying out certificate chain checking in a high-security environment (528),
- storing in a database (122; 522) the check results obtained on the basis of the implementation of the certificate chain checking, wherein the database is arranged in the high-security environment, wherein a replica (538) of the database is arranged outside the high-security environment,
and wherein the second process includes the following steps:
- inputting a digital signature (112; 512) to be checked,
- accessing the replica of the database in order to read out one of the check results stored for a certificate in the database assigned to the signature to be checked,
wherein, in the first process, each of the check results is stored in the database with an access key of the certificate in question, and wherein, in the second process, the access key of the certificate is determined in order to carry out the database access to the replica.

8. The data processing method according to Claim 7, wherein the first process and the second process are carried out asynchronously.

9. The data processing method according to Claim 7 or 8, wherein the first process includes the updating of the database on the basis of certificate revocation information.

10. The data processing method according to one of the preceding Claims 7 to 9, wherein the period of validity of a certificate identified as being valid on the basis of the certificate chain checking is stored in the database, and comprising the following further steps:
- determining the entries in the database of which the period of validity is due to expire or has already expired,
- determining renewed certificates that replace the certificates to which the determined entries in the database relate,
- carrying out certificate chain checking in view of the renewed certificates and storing the check results in this regard in the database.

11. The method according to one of the preceding Claims 7 to 10, wherein the signature relates to a message received from one of the subscribers, and wherein the message is processed transactionally following successful checking of the signature.

12. A computer program product for carrying out a data processing method according to one of the preceding Claims 7 to 11.

## Revendications

1. Système de traitement de données, avec
- des moyens (116 ; 546) pour l'exécution de vérifications de chaînes de certificats, les moyens pour l'exécution de vérifications de chaînes de certificats étant agencés dans un environnement hautement sécurisé (528),
- une banque de données (122 ; 522) pour stocker des résultats de vérification déterminés par les moyens pour l'exécution de vérifications de chaînes de certificats, la banque de données étant agencée dans l'environnement hautement sécurisé,
- une réplique (538) de la banque de données, la réplique étant agencée à l'extérieur de l'environnement hautement sécurisé,
- des moyens (114 ; 514) pour la vérification de signatures numériques, le résultat de vérification d'une vérification de chaîne de certificats étant appelé par accès à la réplique de la banque de données,
dans lequel chacun des résultats de vérification est enregistré dans la banque de données avec une clé d'accès du certificat correspondant, et dans lequel l'accès de la banque de données à la réplique est effectué avec la clé d'accès du certificat associé à la signature numérique.

2. Système de traitement de données selon la revendication 1 ou 2, dans lequel les moyens pour l'exécution de vérifications de chaînes de certificats sont conçus pour traiter des informations de révocation de certificats (120 ; 520), les informations de révocation de certificats identifiant des certificats devenus invalides, les clés d'accès des certificats identifiés dans les informations de révocation de certificats permettant d'accéder à la banque de données, afin d'actualiser la banque de données.

3. Système de traitement de données selon la revendication 1 ou 2, dans lequel les moyens pour l'exécution de vérifications de chaînes de certificats sont conçus pour le traitement d'informations de révocation de certificat (120 ; 520), les informations de révocation de certificat identifiant des certificats devenus invalides, les clés d'accès des certificats identifiés dans les informations de révocation de certificat permettant d'accéder à la banque de données pour actualiser la banque de données.

4. Système de traitement de données selon l'une des revendications précédentes, dans lequel la durée de validité d'un certificat reconnu comme valide suite à la vérification de chaîne de certificats est enregistrée dans la banque de données, et avec des moyens pour la détermination d'entrées dans la banque de données dont la durée de validité approche de l'expiration ou est déjà expirée, afin de renouveler la vérification de chaîne de certificats pour des nouveaux certificats correspondants.

5. Système de traitement de données selon l'une des revendications précédentes, avec des moyens (102 ; 502, 541) pour la réception de messages signés d'un groupe d'abonnés, un certificat étant attribué à chacun des abonnés, et les moyens pour l'exécution de vérifications de chaînes de certificats étant conçus pour vérifier les certificats attribués aux abonnés et pour enregistrer les résultats de vérification des vérifications de chaînes de certificats de ces certificats dans la banque de données.

6. Système de traitement de données selon la revendication 5, dans lequel les messages contiennent des données de personnalisation, et avec des moyens (526) pour la commande d'un dispositif de personnalisation (530) pour la personnalisation d'ébauches à l'aide des données de personnalisation.

7. Procédé de traitement de données avec un premier processus pour l'exécution de vérifications de chaînes de certificats et un deuxième processus pour la vérification de signatures numériques, le premier processus comprenant les étapes suivantes :
- exécution de vérifications de chaînes de certificats dans un environnement hautement sécurisé (528),
- enregistrement des résultats de vérification obtenus suite à l'exécution de vérifications de chaînes de certificats dans une banque de données (122 ; 522), la banque de données étant agencée dans l'environnement hautement sécurisé, une réplique (538) de la banque de données étant agencée à l'extérieur de l'environnement hautement sécurisé,
et dans lequel le deuxième processus comprend les étapes suivantes :
- entrée d'une signature numérique (112 ; 512) à vérifier,
- accès à la réplique de la banque de données, pour lire l'un des résultats de vérification enregistré pour un certificat dans la banque de données qui est attribué à la signature numérique à vérifier,
dans lequel chacun des résultats de vérification est enregistré dans la banque de données avec une clé d'accès du certificat correspondant, et dans lequel la clé d'accès du certificat est déterminée dans le deuxième processus, afin d'exécuter l'accès de la banque de données à la réplique.

8. Procédé de traitement de données selon la revendication 7, dans lequel le premier processus et le deuxième processus sont exécutés de façon asynchrone.

9. Procédé de traitement de données selon la revendication 7 ou 8, dans lequel le premier processus comprend l'actualisation de la banque de données à l'aide d'informations de révocation de certificats.

10. Procédé de traitement de données selon l'une des revendications 7 à 9, dans lequel la durée de validité d'un certificat reconnu comme valide suite à la vérification de chaîne de certificats est enregistrée dans la banque de données, et avec les étapes supplémentaires suivantes :
- détermination des entrées dans la banque de données dont la durée de validité approche de l'expiration ou est déjà expirée,
- détermination de nouveaux certificats remplaçant les certificats auxquels se rapportent les entrées déterminées dans la banque de données,
- exécution de vérifications de chaînes de certificats relatives aux nouveaux certificats et enregistrement des résultats de vérification correspondants dans la banque de données.

11. Procédé selon l'une des revendications 7 à 10, dans lequel la signature se rapporte à un message reçu par l'un des abonnés, et dans lequel un traitement transactionnel du message est effectué après vérification réussie de la signature.

12. Produit de programme informatique pour l'exécution d'un procédé de traitement de données selon l'une des revendications 7 à 11.
